# EUROPEAN PATENT SPECIFICATION

(11) **EP 1 611 182 B1**
(45) Date of publication and mention of the grant of the patent: **24.09.2008**
(21) Application number: 04757856.2
(22) Date of filing: 19.03.2004
(51) Int. Cl.: C08G 65/00, C08G 65/40

(54) **AROMATIC NITRILE CONTAINING ION-CONDUCTING SULFONATED POLYMERIC MATERIAL**
AROMATISCHES NITRIL ENTHALTENDES IONENLEITENDES SULFONIERTES POLYMERMATERIAL
MATERIAU POLYMERE SULFONE CONDUCTEUR IONIQUE CONTENANT DU NITRILE AROMATIQUE

(30) Priority: 19.03.2003 US 455596 P
(43) Date of publication of application: 04.01.2006
(73) Proprietor: VIRGINIA TECH INTELLECTUAL PROPERTIES, INC., Blacksburg, VA 24060 (US)
(72) Inventor: MCGRATH, James, Blacksburg, VA 24060 (US); RIFFLE, Judy, Blacksburg, VA 24060 (US); SUMNER, Michael, Dublin, OH 43016 (US)
(74) Representative: Läufer, Martina
(86) International application number: PCT/US2004/008398
(87) International publication number: WO 2004/086584

(56) References cited:
- EP-A- 1 561 768
- WO-A-00/51716
- WO-A-02/25764
- MECHAM J ET AL: "SYNTHESIS AND CHARACTERIZATION OF CONTROLLED MOLECULAR WEIGHT SULFONATED AMINOFUNCTIONAL POLY(ARYLENE ETHER SULFONE)S PREPARED BYDIRECT POLYMERIZATION" POLYMER PREPRINTS, AMERICAN CHEMICAL SOCIETY, US, vol. 41, no. 2, August 2000 (2000-08), pages 1388-1389, XP002946193 ISSN: 0032-3934
- MECHAM ET AL.: 'Synthesis and characterization of controlled molecular weight sulfonated aminofunctional poly(arylene ether sulfone)s prepared by direct polymerization' POLYMER PREPRINTS vol. 41, no. 2, 2000, page 1388, XP002946193

## Description

### Field of the Invention

The present invention is directed to ion-conducting, nitrile containing sulfonated polymeric materials formed by the direct polymerization of sulfonated monomers and aromatic nitrile monomers. These nitrile containing sulfonated polymers may be used to form ion exchange membranes that have application in fuel cell and ion exchange technologies.

### Background of the Invention

Polymer electrolyte fuel cells (PEFCs) have great potential as an environmentally friendly energy source. Fuel cells have been used in the space program since the 1960's, but recently with the focus on "green" resources, fuel cells have come to the forefront of commercialization. Specifically, fuel cells are being explored for use in automobiles, electronics, and stationary power applications.

Perhaps the most critical component of the fuel cell is the proton exchange membrane (PEM). For the last 30 years, the industry standard for the PEM component of the fuel cell has been Nafion^{®} (polyperfluoro sulfonic acid) by DuPont.

The properties of Nafion^{®} are dominated by its tetrafluoroethlene-based backbone. Nafion^{®} membranes display sufficient proton conductivity, good chemical resistance, and mechanical strength. Some of the membrane's disadvantages include high cost, reduced conductivity at high temperatures (>80°C), and high methanol permeability in direct methanol fuel cells.

Increasing the operation temperature of fuel cells is important for several reasons. Firstly, higher operating temperatures in the fuel cell decreases the carbon monoxide poisoning of the electrocatalyst. Carbon monoxide in concentrations of a few parts per million can adversely affect performance. Secondly, higher temperatures increase reaction kinetics of hydrogen oxidation on the anode and oxygen reduction on the cathode. However, as the temperature is increased, it becomes more difficult to keep the membrane hydrated. Dehydrated membranes lose ionic conductivity and result in poor contact between fuel cell components due to shrinkage of the membrane. The challenge is to produce membranes not limited by the temperature range of liquid water.

Because of the renewed interest in fuel cells and the challenge of high temperature operation, new membrane materials have been explored as potential replacements for Nafion^{®}. Previous work has focused on sulfonated polystyrene, styrene-butadiene block copolymers, or poly(arylene ether)s such as PEEK.
Typically, these polymers were all made by a post-sulfonation polymer modification reaction where the sulfonic acid groups are attached to the already formed polymer backbone.

WO 02/25764 A is an application of the same applicants related to the same field of invention and discloses a sulfonated copolymer having the following chemical structure: 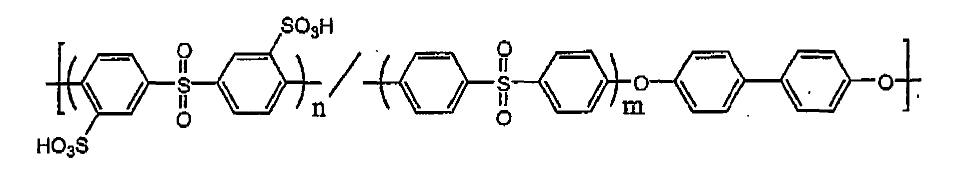 wherein n/n+m ranges from about 0.001 to about 1
as a membrane material; comparable polymers are disclosed in J. Mecham et al.: "Synthesis and characterization of controlled molecular weight sulfonated aminofunctional poly(arylene ether sulfone)s prepared by direct polymerization" Polymer Preprints, American Chemical Society, US, vo. 41, no. 2, August 2000 (2000-08), pages 1388-1389, XP002946193 ISSN: 0032-3934

The WO 00/51716A shows the use of sulfone polymers comprising -C(CF₃)₂-groups.

Sulfonated poly (arylene ether sulfone)s made from post-polymerization sulfonation reactions have been of interest since the pioneering work of Noshay and Robeson, who were able to develop a mild sulfonation procedure for the commercially available bisphenol-A based poly(ether sulfone). This approach found considerable interest in the area of desalinization membranes for reverse osmosis and related water purification areas. In the post-polymerization sulfonation reaction, the sulfonic acid group is restricted to certain locations on the polymer chain. In this example of the bisphenol A based systems illustrated as Structure 1, the sulfonic acid group is almost always restricted to the activated position ortho to the aromatic ether bond. Additionally for this system, only one sulfonic acid group per repeat unit is typically achieved.

Structure 1.

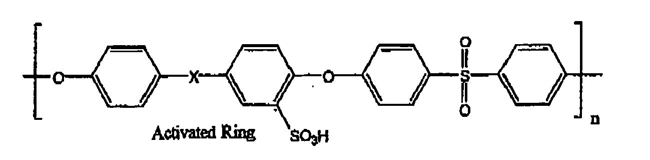

### Summary of the Invention

Subject-matter of the present invention is a sulfonated copolymer including an aromatic nitrile according to claim 1. The copolymer has a glass transition temperature of at least about 200°C, a proton conductivity of at least about 0.10 S/cm at 90°C, and is thermally stable in air up to 1 hour at about 300°C.

In other embodiments in the invention may include a sulfonated copolymer having the following structure: 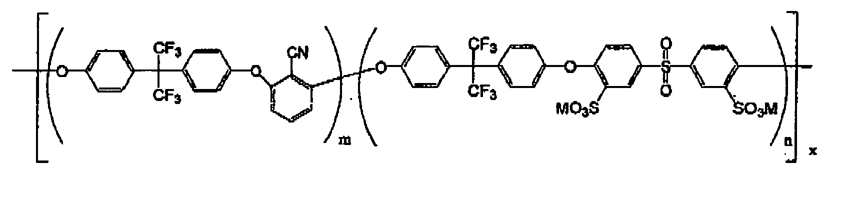 wherein the mole ratio of m:n ranges from about 0.9 to about 0.1; and wherein M is selected from the group consisting of H, a metal cation, and an inorganic cation.

In still other embodiments, the invention may include a proton exchange membrane comprising a nitrile containing sulfonated copolymer having the following structure: 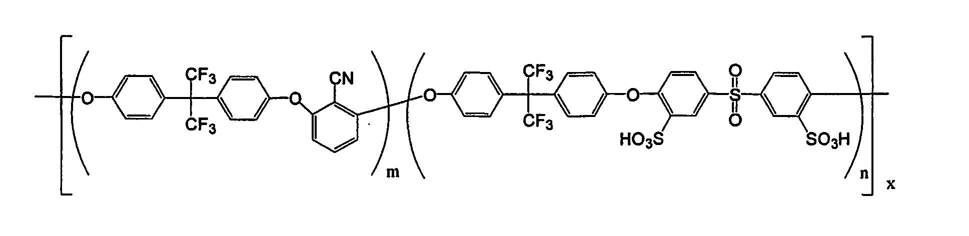 wherein the mole ratio of m:n ranges from about 0.9 to about 0.1.

Still further, the invention relates to a method for making a nitrile containing sulfonated copolymer according to claim 6 comprising the step of reacting an activated aromatic sulfonated monomer having at least one sulfonate group and having at least two leaving groups, an aromatic nitrile comonomer having at least two leaving groups, and bisphenolic type comonomer to form a nitrile containing sulfonated polymer.

The invention relates to a nitrile containing sulfonated copolymer having the following structure: 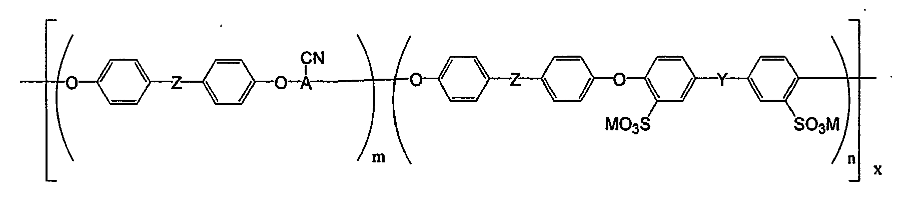 wherein A is selected from the group of an aromatic hydrocarbon and a heterocyclic hydrocarbon; Y is -S(O)₂-, Z is -C(CF₃)₂-, the mole ratio ofm:n ranges from about 0.9 to about 0.1; and M is selected from the group consisting of H, a metal cation, and an inorganic cation.

Still further, the invention relates to a proton exchange membrane containing sulfonated copolymer having the following structure: 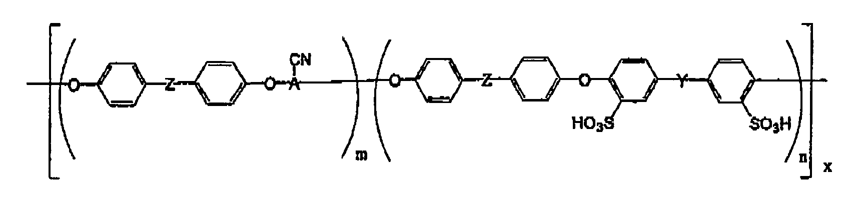 wherein A is an aromatic hydrocarbon; Y is -S(O)₂-, Z is -C(CF₃)₂-, and the mole ratio of m:n ranges from about 0.9 to about 0.1.

The invention also includes a method for making the nitrile containing sulfonated copolymer according to claim 1 comprising the step of reacting an activated 3,3-disulfonated diphenyl sulfone having at least two leaving groups, an aromatic nitrile comonomer having at least two leaving groups, and 4,4'-(hexafluoroisopropylidene) diphenol to form a nitrile containing sulfonated polymer. A mixture of at least two different bisphenolic type commomers may be used.

### Brief Description of the Drawings

Figure 1 is plot of DSC curves of sulfonated hexafluoro poly(arylene ether nitrile) copolymers in the acid form.

Figure 2 is a plot of TGA curves in air of sulfonated hexafluoro poly(arylene ether nitrile) copolymers.

Figure 3 is a plot of water uptake (wt%) versus time for sulfonated hexafluoro poly(arylene ether nitrile) copolymers.

Figure 4 is a plot of water uptake (wt%) versus mole % sulfonation for sulfonated hexafluoro poly(arylene ether nitrile) copolymers.

Figure 5 is a plot of mole % sulfonation versus proton conductivity for sulfonated hexafluoro poly(arylene ether nitrile) copolymers.

Figure 6 is a plot of proton conductivity versus calculated IEC values for different sulfonated poly(arylene ether nitrile) copolymers.

Figure 7 is a plot of proton conductivity versus temperature for a 35 mole% sulfonated hexafluoro poly(arylene ether nitrile) copolymer.

Figure 8 is a plot of proton conductivity versus % relative humidity for the 20, 30, 35, and 45 mole % sulfonated hexafluoro poly(arylene ether nitrile) copolymers.

### Detailed Description of Embodiments of the Invention

Ion-conducting, nitrile containing sulfonated polymeric materials are formed by the direct polymerization of sulfonated monomers and aromatic nitrile monomers. Many of these nitrile containing sulfonated polymers exhibit a glass transition temperature of at least about 200°C, a proton conductivity of at least about 0.10 S/cm at 90°C, and is thermally stable in air for 1 hour at 250°C. These polymers may be used to form membranes that have application in fuel cell and ion exchange technologies. In particular, the membranes may be used in hydrogen, direct methanol, reformate, and other direct oxidation fuel cells. By using sulfonated monomers in the polymerization process, the concentration of sulfonated monomers may be varied with respect to a given comonomer to control the concentration of sulfonate groups in the resulting copolymer.

Further, by using sulfonated monomers, control over the location of the sulfonate group on the polymer is also achieved. For example, as was illustrated in Structure 1, the post-polymerization sulfonation of the bisphenol A poly(ether sulfone) results in the sulfonation of the activated ring. By starting with the sulfonated sulfone, followed by direct polymerization, sulfonation is maintained on the deactivated ring, as shown in Structure 2 below. By controlling the concentration and location of sulfonate groups in the polymer, various properties of the resulting membrane, such as conductivity and water content, may be controlled. Direct polymerization of sulfonated monomers allows for well-defined ion conductor locations, high protonic conductivity, and enhanced stability over polymer electrolytes synthesized by post-sulfonation reactions.

Structure 2.

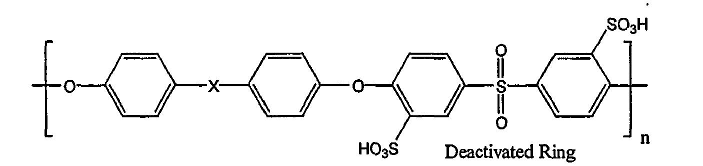

As used herein, "sulfonate" or "sulfonated" refers to a sulfonate group, i.e., -SO₃, either in the acid form (-SO₃H, sulfonic acid) or the salt form (-SO₃M).
The salt form may in the form of a sodium salt or other metal, inorganic, or organic cation.

Further, the term "polymer" is used broadly and includes homopolymers, copolymers, and block copolymers.

Many different types of polymers may be formed in accordance with the present invention. Control over the concentration and location of the sulfonate groups on the polymer may be achieved by using the appropriate sulfonated monomer in conjunction with one or more suitable comonomers. Specific examples of the types of polymers include, but are not limited to, polysulfones, polyimides, polyketones, and poly(arylene ether phosphine oxide)s.

For fuel cell applications, it is important that the proton exchange membrane of the fuel cell be conductive and have good mechanical strength. Aromatic polymers, such as poly(arylene ether sulfone)s, typically have excellent thermal and mechanical properties, as well as resistance to oxidation and acid catalyzed hydrolysis. These properties typically improve when the number of aliphatic units is decreased.

Generally, the invention is directed to an aromatic nitrile containing sulfonated polymer according to claim 1. As will be discussed in more detail below, the aromatic nitrile containing sulfonated polymer may be made by the direct polymerization of a sulfonated activated aromatic monomer, an aromatic nitrile monomer, and a bisphenolic type comonomer. The monomers may include activated halides and may be in the dihalide or may include monomers in the dinitro form. Halides may include, but are not limited to Cl, F, and Br.

The sulfonated activated aromatic monomer may be in the dihalide form and may be prepared by sulfonation of the corresponding activated aromatic dihalide by sulfonation method known to those skilled in the art. This sulfonated activated aromatic dihalide may then be used in the formation of the sulfonated copolymer. An example of a reaction scheme for forming an ion-conducting, nitrile containing sulfonated copolymer is shown in Scheme 1 below.

Scheme 1.

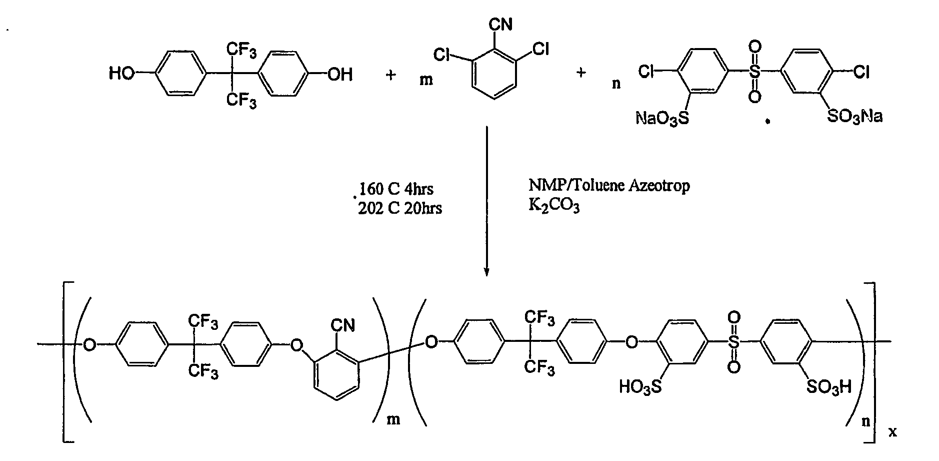

Scheme 1 generally illustrates a reaction scheme involving the polymerization of an aromatic nitrile monomer, a sulfonated activated aromatic monomer, and a bisphenolic type comonomer.

The aromatic nitrile monomer may include a benzonitrile as shown in Scheme 1 but may also have the general structure shown in Structure 3 below where A is an aromatic or heterocyclic hydrocarbon, and may include, for example, C₆H₃, C₁₀H₅, C₁₂H₇ and the like.

Structure 3.

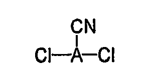

The aromatic nitrile monomer and the sulfonated activated aromatic monomer each contain activated leaving groups. The activated leaving groups on the aromatic nitrile monomer may be the same or may be different than the activated leaving groups for the sulfonated activated aromatic monomer. While the activated leaving group shown in Structure 3 is Cl, the activated leaving group may include, for example, a halide or nitro group. Halides may include, but are not limited to Cl, F, and Br.

The sulfonated activated aromatic monomer has an activated group that activates the leaving group on the sulfonated activated aromatic monomer and may have the general formula shown in Structure 4 below.

Structure 4.

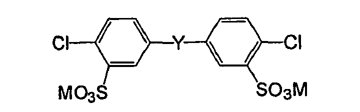

The activating group Y is -S(O)₂-. While the activated leaving group is shown to be Cl, the activated leaving group may include a halide or nitro group. Halides may include, but are not limited to Cl, F, and Br. Associated with the sulfonate group is a cationic moiety M that has a positive charge such as a proton or metal cation. The metal cations may include, but are not limited to, monovalent metals such as Na and K, or divalent metals such as Mg, Ca, and Zn.

The bisphenolic type comonomer may have the general structure shown in Structure 5 below where, Z is -C(CF₃)₂-.

Structure 5.

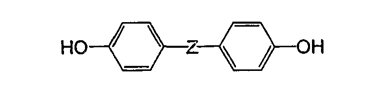

In addition to using a single bisphenolic type comonomer in the polymerization reaction, combinations of two or more different bisphenolic type comonomers may be used depending on the desired properties in the resulting polymer. In an embodiment, a combination of two bisphenolic type comonomers may be used where a first bisphenolic type comonomer with Z being -C(CF₃)₂- is used in combination with a second bisphenolic type comonomer. The molar percentage of the first bisphenolic type comonomer in the combination of bisphenolic type comonomers may range from about 10% to about 90%, and in some embodiments about 30% to about 90%.

The molar ratio of aromatic nitrile monomer to sulfonated activated aromatic monomer may range from about 0.9 to about 0.1, and in some embodiments from about 0.8 to about 0.3, and yet in other embodiments from about 0.7 to about 0.3. The bisphenolic type comonomer or combination of bisphenolic type comonomers may be used in sufficient stoichiometric amounts to produce the desired sulfonated copolymer.

The following discussion will be with respect to the formation of an ion-conducting, nitrile containing, sulfonated polysulfone; however, one skilled in the art will understand that much of the discussion is applicable to other types of polymers discussed above and are within the scope of the present invention.

The aromatic ring, due to its proximity to the sulfone group, is deactivated for sulfonation reactions. Sulfonation on the activated aromatic ring is accomplished by sulfonating the corresponding monomer followed by polymerization to form the polysulfone. In this way, sulfonation of the deactivated ring is maintained.

The formation of the nitrile containing sulfonated polysulfone polymer takes place by selecting or creating the desired aromatic sulfonated monomer, which is typically in the form of a dihalide. The aromatic sulfonated monomer may be added in conjunction with the aromatic nitrile monomer and condensed with an appropriate bisphenolic type comonomer. One particularly useful sulfonated monomer is 3,3'-disulfonated 4,4'-dichlorodiphenyl sulfone (SDCDPS). In one embodiment, the aromatic nitrile monomer may be 2,6-dichlorobenzonitrile. While the dichloro- form is discussed for the sulfonated monomer and aromatic nitrile, other dihalide forms may be used.

The molar ratio of aromatic nitrile monomer to sulfonated activated aromatic monomer may vary depending on the desired properties of the resulting polymer or membrane and can range from range from about 0.9 to about 0.1, in some embodiments from about 0.8 to about 0.3, and in other embodiments 0.7 to about 0.3.

The bisphenolic type comonomer used to form the nitrile containing polysulfone may also vary depending on the desired properties and application of the resulting membrane. For proton exchange membranes where mechanical strength and heat tolerance is important, 4,4'-(hexafluoroisopropylidene)diphenol, is used as the bisphenolic type comonomer.

One embodiment of the present invention includes the direct condensation of 3,3'-disulfonate-4,4'-dichlorodiphenylsulfone, 2,6-dichlorobenzenonitrile and 4,4'-(hexafluoroisopropylidene)diphenol. The nitrile containing sulfonate polymer may be prepared using an N-methyl-2-pyrrolidinone (NMP)-toluene azeotrope solvent mixture with a weak base such as potassium carbonate to form the required phenolate nucleophile such that nucleophilic aromatic substitution may occur to form the desired copolymer. The reaction mixture may be heated to temperatures of about 155°C under refluxing conditions for a time sufficient to form the desired nitrile containing, sulfonated copolymer.

Membranes or films may be formed from the nitrile sulfonated copolymers by methods known to those skilled in the art. These membranes can find application as proton exchange membranes in fuel cells or as ion exchange membranes in ion exchange applications. One method for forming a membrane includes dissolving the sulfonated polymer in a suitable solvent such as DMAC and followed by casting directly onto a glass substrate.

Ion-conducting nitrile containing sulfonated copolymers may exhibit thermal stability in air for an hour up to about 250°C and in some embodiments up to about 300°C in air. Films that contain at least about 20 mol % of the sulfonated comonomer may have glass transition temperatures (Tg) of at least about 200°C and in some embodiments a Tg of 250°C or higher. The ionic exchange capacities (IEC) may range from about 1 to about 1.6 meq g⁻¹. In other embodiments, films of the invention may display proton conductivities of at least about 0.1 S/cm at 90°C.

The following Examples are provided to illustrate aspects of the invention and are not intended to limit the invention to the specific details identified in the Examples.

### Examples

Preparation of 3,3'-disulfonate-4,4'-dichlorodiphenylsulfone

3,3'-Disulfonate-4,4'-dichlorodiphenylsulfone was synthesized by electrophilic aromatic sulfonation of 4,4'-dichlorodiphenylsuflone in fuming sulfuric acid at 110 °C for six hours. Due to the ortho-para directing effects of chlorine substituents and the meta directing effect of the sulfonyl group on the benzene rings of 4,4'-dichlorodiphenylsulfone, the 3 positions (ortho relative to chlorine) of this become sulfonated. ¹H NMR confirmed that substitution occurred in the 3 and 3' positions.

Upon completion of the reaction, the product was recovered by adding the highly acidic reaction solution slowly into ice water saturated with sodium chloride. A number of solvents and solvent combinations were investigated and a 3:1 (wt:wt) mixture of isopropanol:water was chosen to be most suitable for purifying the disulfonated monomer. The crude product was purified for step-growth polymerizations by first recrystallizing at 15% solids from a 3:1 (wt:wt) isopropanol:water solution. The crystallized monomer was subsequently extracted for approximately 12 hours at room temperature in a fresh isopropanol:water (3:1 wt:wt) mixture, then dried overnight under vacuum at 140 °C. After purification of the sulfonated monomer the recovered yield of the desired product was ∼65%. The disulfonated monomer was dried under vacuum for ≈12 hours at 140 °C. TGA demonstrated that small amounts of moisture (≈3-5 wt%) remained after this drying process.

Preparation of Nitrile Containing Copolymers

A series of copolymers were prepared by nucleophilic aromatic substitution from hexafluorobisphenol A as the diphenol and mixtures of 2,6-dichlorobenzonitrile and the sulfonated monomer, 3,3'-disulfonate-4,4'-dichlorodiphenylsulfone (SDCDPS), as the activated dihalides. The mole fractions of the sulfonated dihalide ranged from 0.05-0.5. All of the copolymers were prepared in NMP-toluene solvent mixture utilizing potassium carbonate as a weak base to form the required phenolate nucleophile. The reactions were refluxed for four hours at 155 °C, then the toluene and any water was distilled from the mixtures at 197 °C with the aid of a Dean Stark trap to ensure dry polymerization systems. The copolymerizations were maintained for 20 hours at 200 °C. Proton NMR confirmed that the polymer compositions after purification were consistent with the charged compositions. It should be noted that the sulfonated monomer reacted slowly relative to its unsulfonated counterpart, 4,4'-dichlorodiphenylsulfone.

Relative molecular weights were analyzed with intrinsic viscosity measurements. One series of copolymers had been synthesized with the moisture content in SDCDPS included in the charged monomer weight. By contrast, another series was prepared without including the moisture weight in the monomer charges. Previous studies in our labs have demonstrated that sulfonated poly(arylene ether sulfone) copolymers with intrinsic viscosities between ≈0.5 - 0.8 dL/g (NMP, 25 °C) typically formed brittle films. Intrinsic viscosities were ∼1.0 dL/g (NMP, 25 °C) or above for the series of copolymers where moisture in the SDCDPS was accounted for stoichiometrically during synthesis. These copolymers formed tough ductile films. By contrast, the copolymers prepared without considering the moisture had intrinsic viscosities < 1.0 dL/g (NMP, 25 °C) and were brittle.

Thermal Properties for Sulfonated Copolymers

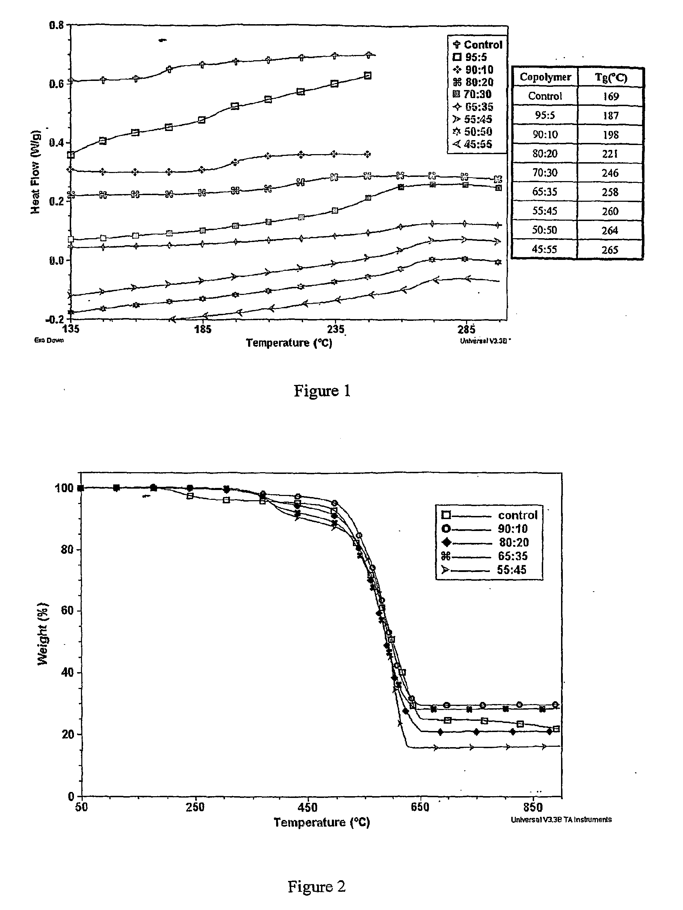

Glass transition temperatures (T_{g})of the copolymers were evaluated using DSC by heating the samples from 25 to 300 °C at 5 °C/min. The glass transition temperatures of the acidified copolymers increased substantially as the mole fraction of sulfonation was increased (Fig. 1). The T_{g}'s increased from 169 °C for the control (no sulfonation) to 258 °C for the copolymer containing 35 mole % sulfonated repeat units. Increasing the mole fraction of the sulfonated units beyond 0.35 caused little increase in the glass transition temperatures. The copolymers containing higher fractions of sulfonated units were heated to 400 °C to determine whether a second transition could be detected due to a hydrophilic phase. A secondary transition was not detected up to 350 °C and heating beyond this temperature caused some degradation.

The mass losses with temperature of the acidified copolymer films were examined by TGA to determine the temperature range wherein the sulfonic acid groups cleaved from the polymer chain. Copolymer films were heated to 150 °C and held at this temperature for 30 minutes to remove any residual solvent and moisture. They were then cooled to room temperature and heated to 900 °C at 10 °C/min. The temperatures where 5% weight loss was observed and the percentages of char remaining were considered an evaluation of thermal stability.

All of the polymers except the unsulfonated control exhibited good thermal stability up to ∼350 °C where weight loss was observed. The amount of mass loss at this temperature increased as the level of sulfonation along the copolymer chain was increased (Fig. 2). The mass losses at this temperature correlated well with cleavage of the sulfonic acid groups from the polymer backbones. The final weight loss temperatures were observed at ∼500 °C and this was attributed to degradation of the polymer chains. All of the copolymers had char yields at 900 °C between 20 and 40%, but these did not correlate with the concentrations of sulfonate groups.

Water Uptake, Methanol Permeability, and Morphology

Small-angle X-ray investigations of the morphology of Nafion have demonstrated that this polymer is phase segregated. One phase consisted of hydrophilic domains wherein polar sulfonic acid groups were aggregated. The other region was comprised of the nonpolar fluorinated portions of the polymer aggregated in hydrophobic clusters. The hydrophilic domains in these sulfonated copolymers were primarily responsible for water absorption via hydrogen bonding. Typically, the equilibrium water absorption of sulfonated poly(arylene ether sulfone)s is linear up to about 0.40 mole fraction of sulfonated units. Beyond this level of sulfonation, water uptake increases drastically, signifying a change in phase morphology.

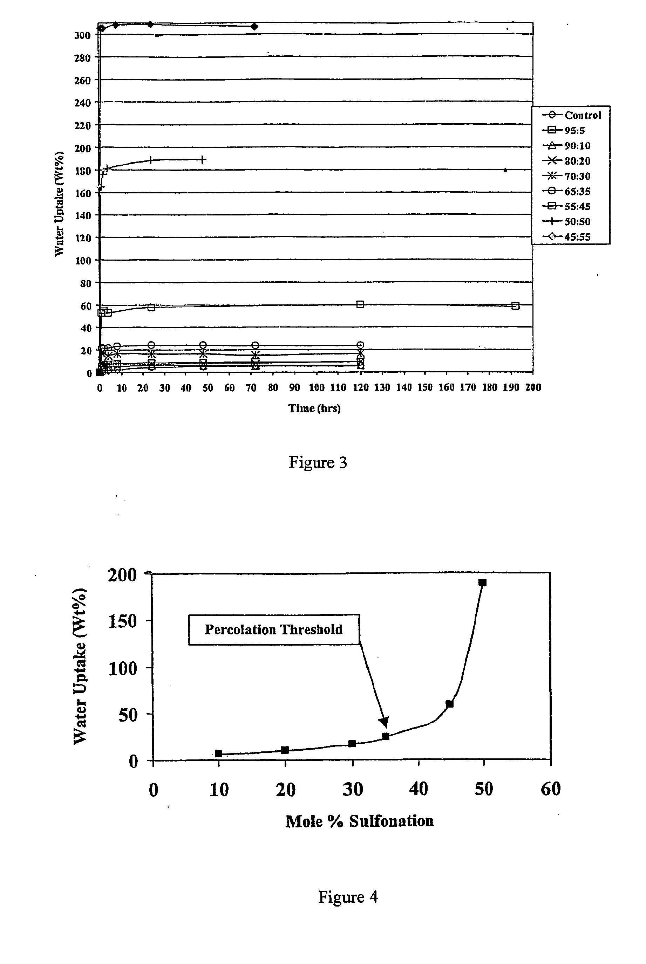

For comparisons, water absorption of the nitrile-functional copolymers was measured as a function of time (Fig. 3). The ion exchange capacities (IEC in meq-g⁻¹) were calculated for each composition (Table 1). Upon submersion in deionized water, the copolymer membranes with ≥0.1 mole fraction of sulfonated units reached the equilibrium in water uptake within the first hour. Water absorption increased linearly up to 0.35 mole fraction of the units sulfonated. Beyond this level of sulfonation, the water uptake increased drastically and the copolymer containing 0.55 mole fraction of sulfonated units absorbed ∼300% water by weight.

**Table 1. Water uptake (wt%) and calculated IEC values for Nafion 117 and three different sulfonated poly(arylene ether) copolymers at 20, 30, and 35 mole % sulfonation.**

| Mole % Sulfonation | Copolymer | Water Uptake (wt%) | IEC (meq/g) |
|---|---|---|---|
| 20 | Sulfonated PAES | 17 | 0.92 |
| 20 | Sulfonated 6F-PAES | 15 | 0.69 |
| 20 | Sulfonated 6F-PAE-CN | 7 | 0.82 |
| 30 | Sulfonated PAES | 31 | 1.34 |
| 30 | Sulfonated 6F-PAES | 23 | 1.00 |
| 30 | Sulfonated 6F-PAE-CN | 16 | 1.16 |
| 35 | Sulfonated PAES | 44 | 1.53 |
| 35 | Sulfonated 6F-PAES | 38 | 1.15 |
| 35 | Sulfonated 6F-PAE-CN | 24 | 1.32 |
| | Nafion 117 | 37 | 0.91 |

In comparison to sulfonated poly(arylene ether sulfone)s prepared with biphenol or hexafluoroisopropylidene diphenol, as well as to Nafion 117, the nitrile functional copolymers with 20, 30 and 35 mole percent of the units sulfonated had lower equilibrium water absorption. Moreover, at equivalent IEC values, the nitrile functional copolymers absorbed considerably less moisture.

The phase morphology of the sulfonated nitrile functional poly(arylene ether) with 0.35 of the repeat units sulfonated was investigated with AFM in the tapping mode on a 1 µm x 1 µm scale. This copolymer had a two-phase morphology as demonstrated by the dark and light regions in the AFM image. The dark regions in the image depicted the softer hydrophilic regions containing the water, while the light colored regions corresponded to the harder hydrophobic regions. The dark regions were continuous and approximately 4-10 nm in width. The lighter regions were also continuous but ranged from about 25-40 nm in size. In comparison to a sulfonated poly(arylene ether sulfone) previously imaged (prepared from biphenol, dichlorodiphenylsulfone and SDCDPS with 40% of the units sulfonated), the nitrile functional copolymer morphology was considerably different. The sulfonated poly(arylene ether sulfone) (from biphenol, dichlorodiphenylsulfone and SDCDPS) had a more segregated morphology with many of the hydrophilic domains in clusters with less connectivity. The continuous hydrophilic phase morphology of the sulfonated nitrile functional copolymers was similar to that observed in Nafion 117.

Typically transforming from segregated to continuous morphologies of the hydrophilic domains in perfluorosulfonic acid copolymers as well as suflonated poly(arylene ether sulfone)s correlate with large increases in equilibrium water uptake. Percolation of the hydrated hydrophilic regions into continuous structures occurred with ≥35% of the units sulfonated for copolymers in the poly(arylene ether sulfone) series (from biphenol, dichlorodiphenylsulfone, and SDCDPS). The continuous morphologies of the hydrated hydrophilic phases in the sulfonated poly(arylene ether)s containing the nitrile groups may help to explain the nonlinear increase in water uptake above 35 mole % sulfonation (Fig. 4).

Achieving low methanol permeation through a membrane is important for copolymer membrane performance in direct methanol fuel cells. Recent work in our labs has demonstrated that sulfonated poly(arylene ether sulfone)s have considerably lower methanol permeabilities and comparable proton conductivities when compared to Nafion 117. It has also been shown that methanol permeability and water uptake in sulfonated poly(arlyene ether sulfone)s are correlated. As the fraction of sulfonated units is increased, both the equilibrium water uptake and the methanol permeability increase.

Methanol permeabilities of sulfonated poly(arylene ether sulfone) copolymers with different chemical structures and Nafion 117 were compared at 25 °C (Table 2). The three sulfonated copolymers were selected because they had similar equilibrium water absorption, IEC's, and proton conductivities. Methanol permeabilities through the sulfonated copolymer containing the nitrile groups was higher than the other sulfonated poly(arylene ether sulfone)s, but was considerably lower than Nafion 117.

**Table 2. Methanol permeability values at 25°C for Nafion 117 and three different sulfonated poly (arylene ether) copolymers.**

| Copolymer - (mole % Sulfonation | IEC (meq/g) | Methanol Permeability x 10⁸ (cm²/s) |
|---|---|---|
| Sulfonated-PAES-(35 mole % Sulfonation | 1.53 | 55 |
| Sulfonated-6F-PAES-(40 mole % Sulfonation | 1.3 | 62 |
| Sulfonated-6F-PAE-CN-(35 mole % Sulfonation | 1.32 | 87 |
| Nafion 117 | 0.91 | 167 |

Conductivity

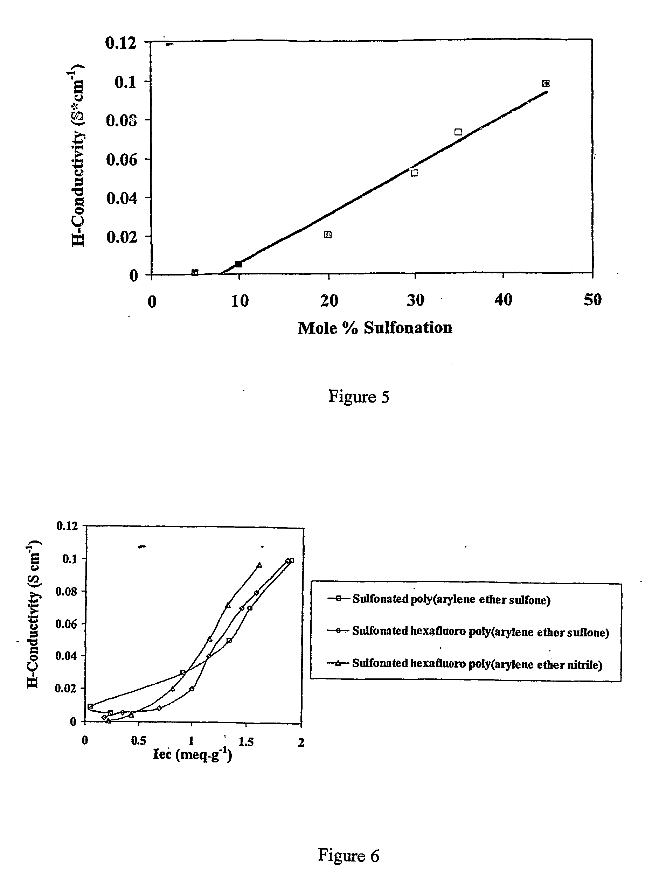

Proton conductivities of the series of sulfonated copolymers containing nitrile groups were measured as a function of mole fraction of units sulfonated, relative humidity, and temperature. The experiments were conducted in a conductivity cell submersed in deionized water. Proton conductivities increased linearly from 0.0005 S/cm to ∼0.10 S/cm as a function of mole % sulfonation at 25 °C (Fig. 5). Conductivity of the copolymer containing 0.45 mole fraction of the sulfonated repeat units was 0.10 S/cm, comparable to Nation 117.

To compare acidities of the sulfonated nitrile functional copolymers relative to two other sulfonated copolymers, proton conductivities between 10 and 35 mole % sulfonation were plotted as a function of IEC values (Fig. 6). The two other polymers in the comparison were sulfonated poly(arylene ether sulfone)s and hexafluoro sulfonated poly(arylene ether sulfone)s. The curves demonstrate that between IEC's of ∼0.8 and 1.6 meq/g the sulfonated nitrile functional copolymers have higher proton conductivities relative to the other two copolymers.

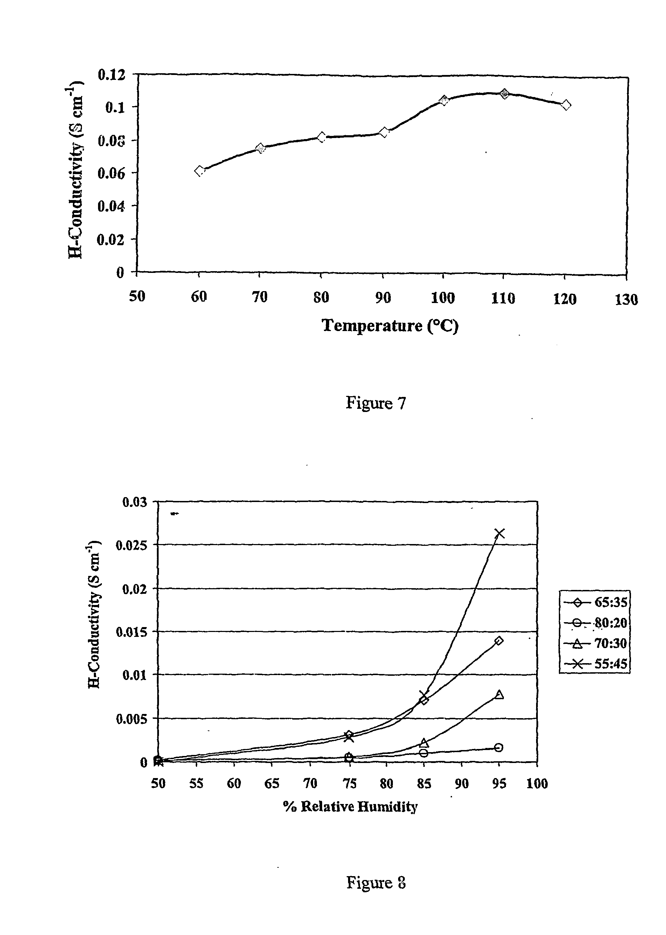

The proton conductivity of the 35 mole % sulfonated nitrile functional copolymer was evaluated as a function of temperature at 100% humidity using a Parr reactor. As temperature was increased, proton conductivities increased to 0.11 S/cm at ∼110 °C. Further increases in temperature caused excessive swelling of the membranes and proton conductivities could not be accurately measured (Fig. 7). This temperature versus conductivity behavior is similar to that of other sulfonated poly(arylene ether sulfone)s. However, the upper temperature where conductivity could be measured before excessive swelling occurred was slightly lower for the nitrile functional copolymers. The study demonstrated that proton conductivities of the sulfonated nitrile functional copolymer membranes could be elevated to high levels by controlling temperature. These membranes had an upper operating temperature limit that was substantially higher (∼30 °C higher) than Nafion 117, which suggests they may perform better in fuel cells operated at somewhat elevated temperatures.

For water-based fuel cells, it is of great interest to determine the performance of a membrane as a function of relative humidity. Proton conductivities of four sulfonated nitrile functional copolymers (20, 30, 35, and 45 mole % sulfonation) were studied at different humidity levels using a humidity/temperature controlled oven at 80 °C. Proton conductivities increased slightly as the relative humidity was increased from 50 to 85% in all four of the copolymers (Fig. 8). However, proton conductivities through membranes of copolymers with 30, 35, and 45 mole % sulfonated units increased drastically when the relative humidity was elevated from 85 to 95%.

## Claims

1. A nitrile containing sulfonated copolymer having the following structure: 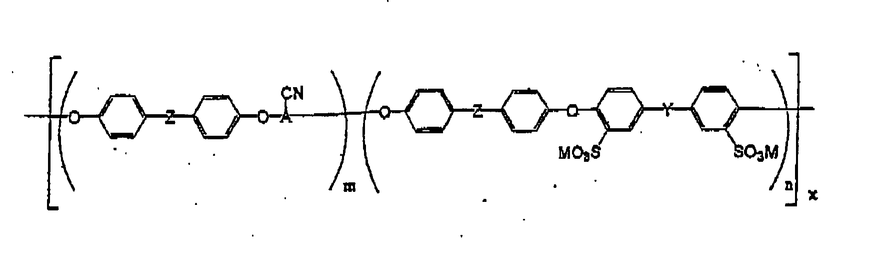 wherein:
A is selected from the group of an aromatic hydrocarbon and a heterocyclic hydrocarbon;
Y is SO_{2;}
Z is -C(CF₃)₂-;
the mole ratio of m:n ranges from about 0.9 to about 0.1; and
M is selected from the group consisting of H, a metal cation, and an inorganic cation.

2. The nitrile containing copolymer of claim 1 wherein A is C₆H₃.

3. The sulfonated copolymer of claim 2 wherein the mole ratio of m:n ranges from about 0.8 to about 0.3.

4. A proton exchange membrane containing the sulfonated copolymer according to one of claims 1 to 3, where M is H.

5. The proton exchange membrane of claim 4 wherein the membrane has a proton conductivity of at least about 0,10 S/cm at 90 °C, and is thermally stable in air up to an hour at 250 °C.

6. A method for making a nitrile containing sulfonated copolymer according to claim 1 comprising the step of reacting an activated 3,3-disulfonated diphenyl sulfone having at least two leaving groups, an aromatic nitrile comonomer having at least two leaving groups, and 4,4'-(hexafluoroisopropylidene) diphenol to form a nitrile containing sulfonated polymer.

7. A method according to claim 6, wherein the activated aromatic sulfonated monomer is 3,3'-disulfonated 4,4'-dichlorodiphenyl sulfone.

8. The method of claim 6 or 7, wherein the aromatic nitrile comonomer is 2,6-dichlorobenzonitrile.

9. The method of one of claims 6 to 8, wherein the sulfonate groups are sulfonic acid groups.

10. The method of one of the preceding claims, wherein the sulfonate groups are in the salt form.

11. The use of a copolymer according to one of claims 1 to 3 for ion exchange membranes in fuel cells.

## Patentansprüche

1. Ein Nitril enthaltendes sulfoniertes Copolymer mit der folgenden Struktur: 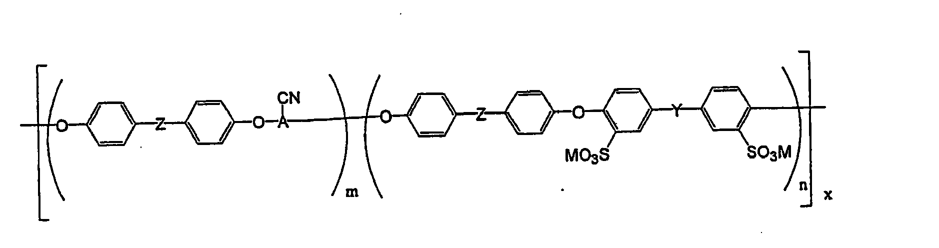 worin:
A ausgewählt ist aus der Gruppe aus einem aromatischen
Kohlenwasserstoff und einem heterozyklischen Kohlenwasserstoff;
Y SO₂ ist;
Z -C(CF₃)₂- ist;
das Molverhältnis von m:n im Bereich von etwa 0,9 bis etwa 0,1 liegt; und
M ausgewählt ist aus der Gruppe bestehend aus einem H, einem Metallkation und einem anorganischen Kation.

2. Das Nitril enthaltende Copolymer nach Anspruch 1, worin A C₆H₃ ist.

3. Das sulfonierte Copolymer nach Anspruch 2, worin das Molverhältnis von m:n im Bereich von etwa 0,8 bis etwa 0,3 liegt.

4. Eine Protonenaustauschmembran enthaltend das sulfonierte Copolymer gemäß einem der Ansprüche 1 bis 3, wobei M = H ist.

5. Die Protonenaustauschmembran nach Anspruch 4, wobei die Membran eine Protonenleitfähigkeit von wenigstens etwa 0,10 S/cm bei 90 °C hat und in Luft bis zu einer Stunde bei 250 °C thermisch stabil ist.

6. Ein Verfahren zur Herstellung eines Nitril enthaltenden sulfonierten Copolymers gemäß Anspruch 1, welches den Schritt umfasst, dass ein aktiviertes 3,3-disulfoniertes Diphenylsulfon mit wenigstens zwei Abgangsgruppen, ein aromatisches Nitrilcomonomer mit wenigstens zwei Abgangsgruppen und 4,4'-(hexafluoroisopropyliden)diphenol zur Reaktion gebracht werden, um ein Nitril enthaltendes sulfoniertes Polymer zu bilden.

7. Ein Verfahren nach Anspruch 6, wobei das aktivierte aromatische sulfonierte Monomer 3,3'-disulfoniertes 4,4'-dichlorodiphenylsulfon ist.

8. Das Verfahren nach Anspruch 6 oder 7, wobei das aromatische Nitrilcomonomer 2,6-dichlorobenzonitril ist.

9. Das Verfahren nach einem der Ansprüche 6 bis 8, wobei die Sulfonatgruppen Sulfonsäuregruppen sind.

10. Das Verfahren nach einem der vorstehenden Ansprüche, wobei die Sulfonatgruppen in der Salzform sind.

11. Die Verwendung eines Copolymers nach einem der Ansprüche 1 bis 3 für Ionenaustauschmembranen in Brennstoffzellen.

## Revendications

1. Copolymère sulfoné contenant un nitrile présentant la structure suivante : 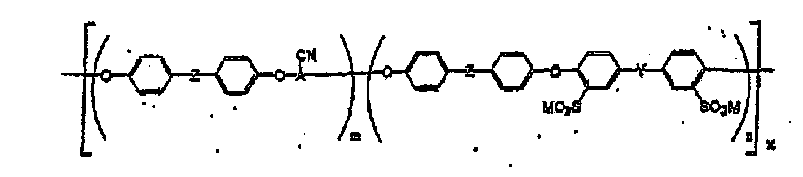 dans laquelle :
A est sélectionné parmi le groupe comprenant un hydrocarbure aromatique et un hydrocarbure hétérocyclique ;
Y est SO₂ ;
Z est -C(CF₃)₂- ;
le rapport molaire de m : n est compris entre environ 0,9 et environ 0,1 ; et
M est sélectionné parmi le groupe constitué de H, un cation métallique, et un cation minéral.

2. Copolymère contenant un nitrile selon la revendication 1 dans lequel A est C₆H₃.

3. Copolymère sulfoné selon la revendication 2, dans lequel le rapport molaire de m : n est compris entre environ 0,8 et environ 0,3.

4. Membrane échangeuse de protons contenant le copolymère sulfoné selon l'une des revendications 1 à 3, où M est H.

5. Membrane échangeuse de protons selon la revendication 4, dans laquelle la membrane présente une conductivité protonique d'au moins environ 0,10 S/cm à 90° C, et est thermiquement stable dans l'air pendant une durée pouvant aller jusqu'à une heure à 250° C.

6. Procédé de fabrication d'un copolymère sulfoné contenant un nitrile selon la revendication 1, comprenant l'étape consistant à faire réagir un diphénylsulfone 3,3-disulfoné activé présentant au moins deux groupes partants, et un comonomère nitrile aromatique présentant au moins deux groupes partants, et du diphénol 4,4'-(hexafluoroisopropylidène) pour former un polymère sulfoné contenant un nitrile.

7. Procédé selon la revendication 6, dans lequel le monomère sulfoné aromatique activé est du 4,4'-dichlorodiphénylsulfone 3,3'-disulfoné.

8. Procédé selon la revendication 6 ou la revendication 7, dans lequel le comonomère nitrile aromatique est du 2,6-dichlorobenzonitrile.

9. Procédé selon l'une des revendications 6 à 8, dans lequel les groupes sulfonés sont des groupes acides sulfoniques.

10. Procédé selon l'une des revendications précédentes, dans lequel les groupes sulfonés sont sous la forme de sel.

11. Utilisation d'un copolymère selon l'une des revendications 1 à 3 pour des membranes échangeuses d'ions dans des piles à combustible.
